# EUROPÄISCHE PATENTSCHRIFT

(11) **EP 3 786 009 B1**
(45) Veröffentlichungstag und Bekanntmachung des Hinweises auf die Patenterteilung: **10.01.2024**
(21) Anmeldenummer: 20193332.2
(22) Anmeldetag: 28.08.2020
(51) Int. Cl.: B60S 9/12, B60S 9/10

(54) **HYDRAULISCH BETÄTIGBARE STÜTZVORRICHTUNG AN EINEM FAHRZEUG ODER AN EINEM FAHRZEUGAUFBAU**
HYDRAULICALLY ACTUATABLE SUPPORT DEVICE ON A VEHICLE OR ON A VEHICLE BODY
DISPOSITIF DE SUPPORT À ACTIONNEMENT HYDRAULIQUE SUR UN VÉHICULE OU SUR UNE CARROSSERIE DE VÉHICULE

(30) Priorität: 30.08.2019 DE 102019123386; 12.09.2019 DE 102019124528
(43) Veröffentlichungstag der Anmeldung: 03.03.2021
(73) Patentinhaber: EWO Fluid Power GmbH, 73277 Owen (DE)
(72) Erfinder: Evesque, Christian, 73275 Ohmden (DE)
(74) Vertreter: Schrooten, Rolf

(56) Entgegenhaltungen:
- EP-A2- 0 163 544
- BE-A- 502 910
- DE-A1- 2 340 891
- GB-A- 425 852
- US-A1- 2018 281 755

## Beschreibung

Die vorliegende Erfindung betrifft eine hydraulisch betätigte Stützvorrichtung an einem Fahrzeug oder an einem Fahrzeugaufbau nach dem Oberbegriff von Anspruch 1. Sie dient zum Abstützen und/oder Anheben und/oder zum Nivellieren eines Fahrzeugs oder Fahrzeugaufbaus, beispielsweise eines Wohnmobils oder eines einachsigen Anhängers. Dabei kann ein Stützfuß von einer hochgefahrenen Transportposition in eine heruntergefahrene Abstützposition gebracht werden, indem sein Kopfbereich durch einen Hydraulikzylinder verlagert und ein Zwischenbereich des Stützfußes durch eine daran angelenkte Seitenstrebe geführt wird. Im Sinne der vorliegenden Patentanmeldung bedeutet die Anlenkung eines ersten Elements an einem zweiten Element, dass die beiden Elemente gelenkig miteinander verbunden sind, wobei die gelenkige Verbindung unmittelbar oder mittelbar über zwischengefügte Elemente ausgeführt sein kann.

Der Einsatz derartiger Stützvorrichtungen an Wohnwagen ist beispielsweise aus der DE 28 43 373 A1 oder aus der DE 41 26 085 A1 bekannt, wo die Vorrichtungen unterhalb des Wagenbodens, insbesondere auch unterhalb des Chassis des Anhängers montiert sind. Mit ihrer Hilfe kann der Wohnwagen nur auf relativ ebenen Campingplätzen sicher abgestellt und nur in Längsrichtung waagerecht ausbalanciert festgesetzt werden. Üblicherweise werden die Stützvorrichtungen über eine drehbar gelagerte Spindel mit darauf gelagerter Spindelmutter manuell mittels einer Handkurbel betrieben, was wenig komfortabel und oft sehr mühsam ist. Zudem können derartige Stützvorrichtungen keine hohen Kräfte übertragen. Eine Hebefunktion ist nur bedingt möglich, da die Bodenstruktur des Anhängers bzw. Wohnwagens nicht dafür ausgelegt ist. Eine Korrektur der Neigung in Querrichtung lässt sich daher nur mit Hilfe des Zugfahrzeuges realisieren und erfordert dabei mühsame Rangierkunst des Fahrers.

Kritisch bei diesen Stützvorrichtungen sind insbesondere auch die Platz- und Einbauverhältnisse. So soll beim Herunterfahren des Stützfußes in die Stützposition eine möglichst große Stützhöhe erreichbar sein, die optimalerweise sogar die Räder des Fahrzeugs vollständig vom Untergrund abhebt, um diese bei längeren Abstellzeiträumen zu entlasten oder beispielsweise auch einen Radwechsel im Falle einer Reifenpanne zu ermöglichen. Gleichzeitig soll bei nach oben in die Transportposition hochgefahrenem Stützfuß eine möglichst kleine Einbauhöhe eingehalten werden, um Beschädigungen während der Fahrt des Fahrzeugs möglichst zu vermeiden.

Es gibt Systeme auf Basis von Teleskopzylindern (= mehrstufige Hydraulikzylinder), die direkt an der Achse des Anhängers angebracht werden. Damit wird die waagerechte Ausbalancierung des Fahrzeugs nach dessen Abkuppeln vom Zugfahrzeug möglich gemacht, da die Achse diese Last übertragen kann. Allerdings benötigt ein solches System mindestens weitere zwei Scheren-Stützen, in der Regel vier Stück in ausreichender Entfernung von der Mittelachse des Anhängers, um die waagerechte Ausrichtung des Anhängers in Längsrichtung zu gewährleisten.

Der Einsatz von Teleskopzylindern in ausreichender Entfernung zu der Mittelachse des Anhängers scheitert daran, dass ein Teleskopzylinder eine zu große Bauhöhe erfordern würde, um die benötigte Hubhöhe zu generieren. Beim Fahren des Anhängers müsste der Teleskopzylinder dann in eine Transportposition hochgeklappt werden, was mit sehr hohen Kosten verbunden wäre.

Zudem muss bei jeder Art von Anhänger, insbesondere bei Wohnwagen, die Problematik der zulässigen Nutzlast besonders beachtet werden. Ob bei konventionellen Stützsystemen oder bei der Verwendung von Teleskopzylindern, die Last wird in der Tat auf sieben Punkten verteilt gestützt. Diese hohe Anzahl an Abstützpunkten verursacht ein hohes Gewicht, das von der zur Verfügung stehenden und oftmals nur geringen Nutzlast abgezogen werden muss.

Aus der DE 10 2017 124 198 A1 ist eine hydraulisch betätigte Stützvorrichtung an einem Fahrzeug bekannt, die den vorgenannten Anforderungen gerecht wird. Zudem ist sie leicht handzuhaben und bietet somit einen hohen Komfort bei der Benutzung. Diese Stützvorrichtung umfasst eine unter dem Boden oder Chassis des Fahrzeugs befestigte Konsole mit einer Führungsbahn, in der der obere Kopfbereich des Stützfußes zum Verstellen des Stützfußes zwischen der hochgefahrenen Transportposition und der heruntergefahrenen Stützposition verschiebbar geführt ist. Zum komfortablen Verstellen des Stützfußes ist an der Konsole ein einstufiger und doppeltwirkender Hydraulikzylinder vorgesehen, dessen mit dem Kolben verbundene Kolbenstange an dem Kopfbereich des Stützfußes angelenkt ist. Allerdings ist die Konsole mit der darin ausgebildeten Führungsbahn für den Kopfbereich des Stützfußes mit zusätzlichem Gewicht verbunden.

Auch aus der US 2006/0163859 A1 ist eine hydraulisch betätigte Stützvorrichtung an einem Fahrzeug bekannt, bei der unter dem Boden des Fahrzeugs eine Konsole mit einer Führungsbahn für Rollen angeordnet ist, welche jeweils am oberen Kopfbereich von zwei einander gegenüberliegenden Stützfüßen vorgesehen sind. Beide Stützfüße können über einen gemeinsamen Hydraulikzylinder jeweils zwischen einer hochgefahrenen Transportposition und einer heruntergefahrenen Stützposition verstellt werden. Dabei ist das freie Ende der Kolbenstange des Hydraulikzylinders an dem Kopfbereich eines Stützfußes und der von der Kolbenstange abgewandte Bodenbereich des Zylindergehäuses an dem Kopfbereich des anderen Stützfußes angelenkt, so dass der Hydraulikzylinder über die Rollen der beiden Kopfbereiche ebenfalls in der Führungsbahn geführt ist. Dabei kann sich der Hydraulikzylinder allerdings aufgrund einer fehlenden unbeweglichen Verbindung zum Fahrzeug in Richtung seiner axialen Längserstreckung frei in der Führungsbahn hin und her bewegen, so dass eine gezielte Verstellung nur eines Stützfußes dieser Stützvorrichtung nicht möglich ist. Außerdem ist auch hier die Konsole mit der Führungsbahn für den Kopfbereich der beiden Stützfüße mit zusätzlichem Gewicht verbunden.

Die GB 425 852 A offenbart ebenfalls eine hydraulisch betätigte Stützvorrichtung an einem Fahrzeug, bei der unter dem Boden des Fahrzeugs eine Konsole mit Führungsbahnen für Rollen angeordnet ist, welche am oberen Kopfbereich eines Stützfußes und gleichzeitig an einem Endbereich eines Hydraulikzylinders vorgesehen sind, der auf einer in der Konsole unbeweglich feststehenden Kolbenstange verschiebbar geführt ist. Eine Seitenstrebe ist einerseits an einem Zwischenbereich des Stützfußes sowie andererseits an einem fest auf der Konsole liegenden Anlenkpunkt jeweils schwenkbar angelenkt. Zum Herunterfahren des Stützfußes in die Stützposition wird der Hydraulikzylinder hydraulisch beaufschlagt, wodurch er sich in der Konsole auf der feststehenden Kolbenstange verschiebt, bis er zu einem Großteil aus der Konsole herausragt. Zum Hochfahren des Stützfußes in die Transportposition soll der Hydraulikzylinder beim Abschalten der Druckbeaufschlagung durch eine Rückstellfeder wieder zurück in seine Ausgangsposition in die Konsole hineingezogen werden.

Aus der BE 502 910 A ist ein hydraulischer Wagenheber bekannt, der durch die Betätigung des Bremspedals über die Hydraulikflüssigkeit der Bremsanlage eines Kraftfahrzeugs betätigt werden kann. Der Wagenheber umfasst eine Seitenstrebe, die mit einem Ende an einem nach unten in eine Stützposition schwenkbaren Stützfuß angelenkt ist, während ihr anderes Ende an einem vom Hydraulikzylinder des Wagenhebers entfernten Anlenkpunkt angelenkt ist, so dass der an der Kolbenstange des Hydraulikzylinders angelenkte Kopfbereich des Stützfußes sich in jeder Position des Stützfußes zwischen dem Hydraulikzylinder und dem hiervon entfernten Anlenkpunkt der Seitenstrebe befindet.

Aus der US 2018/0281755 A1 ist ein hydraulisches Stabilisierungssystem bekannt, bei dem eine Mehrzahl von hydraulisch betriebenen Stützvorrichtungen vorgesehen ist, die jeweils einen doppeltwirkenden Hydraulikzylinder aufweisen. Jede Stützvorrichtung umfasst ein Stützbein, das in einem mittleren Bereich an einer schwenkbaren Seitenstrebe und an seinem oberen Ende an dem freien Ende der Kolbenstange angelenkt ist, die aus dem Zylindergehäuse herausgeführt ist. Durch hydraulische Druckbeaufschlagung des Kolbens auf der einen oder anderen Seite kann die mit dem Kolben verbundene Kolbenstange aus dem Zylindergehäuse heraus oder in das Zylindergehäuse hineingefahren und dabei das Stützbein in eine hochgefahrene Transportposition bzw. in eine heruntergefahrene Abstützposition gebracht werden. Das Zylindergehäuse ist dabei in einer Basis untergebracht, die ihrerseits an einer weiteren Struktur wie zum Beispiel an einem Anhänger oder an einem anderen Fahrzeug montiert werden kann. Innenseitig bildet die Basis eine Führungsschiene aus, auf der ein Lagerzapfen oder eine Rolle geführt ist, der bzw. die an dem oberen Ende des Stützbeins gelagert ist, so dass sich das Stützbein insbesondere in der heruntergefahrenen Abstützposition über die Führungsschiene an der weiteren Struktur abstützen kann.

Die EP 0 163 544 A2 offenbart ein Stabilisierungs- und Nivellierungssystem für Wohnwagen oder Anhänger. Es umfasst eine Anzahl von hydraulisch betriebenen Stützbeinen, die über ein Steuerventil mit einer gemeinsamen Pumpeinrichtung verbunden sind, um ein unter Druck stehendes Hydraulikfluid zu den jeweiligen Stützbeinen liefern zu können. Dabei umfasst jedes Stützbein einen Hydraulikzylinder, dessen Kolbenstange an beiden Enden aus dem Zylindergehäuse herausgeführt ist und über jeweils einen Winkel an dem Chassis des Wohnwagens oder Anhängers befestigt ist. Durch die Zufuhr von Hydraulikfluid kann das Zylindergehäuse auf der feststehenden Kolbenstange gegen eine Feder in eine Richtung verfahren werden, in der ein Stützbein, das mit seinem oberen Ende am Zylindergehäuse und in einem Zwischenbereich an einer schwenkbaren Seitenstrebe angelenkt ist, von einer hochgefahrenen Transportposition in eine heruntergefahrene Abstützposition gebracht wird. Durch Wegnahme des Hydraulikdrucks drückt die Feder das Zylindergehäuse auf der feststehenden Kolbenstange in seine Ausgangsposition zurück, wodurch das Stützbein aus der heruntergefahrenen Abstützposition wieder zurück in seine hochgefahrene Transportposition gebracht wird.

Aus der DE 23 40 891 A1 ist eine hydraulisch betätigte Stützvorrichtung an einem Fahrzeug bekannt, bei der eine Seitenstrebe einerseits an einem um ein Lager hoch und runter schwenkbaren Stützfuß und andererseits an einem relativ zu einem ersten Zylindergehäuse feststehend Anlenkpunkt angelenkt ist, wobei dieses erste Zylindergehäuse aber zum Verschwenken des Stützfußes auf einer als Führungselement dienenden Kolbenstange hin und her verlagerbar ist. Um als Führungselement bzw. Führungsbahn für dieses erste Zylindergehäuse dienen zu können, ist die Kolbenstange an ihren beiden Enden durch jeweils einen Stützblock starr mit dem Fahrzeug verbunden. Ferner umfasst diese Stützvorrichtung einen zweiten Hydraulikzylinder, der ebenso wie die Kolbenstange starr mit dem Fahrzeug verbunden ist. Dabei ist das den Stützfuß als Fixpunkt schwenkbar aufnehmende Lager fest an dem zweiten Hydraulikzylinder angebracht und somit relativ zu dem zweiten Zylindergehäuse feststehend angeordnet.

Aufgabe der vorliegenden Erfindung ist es daher, eine konstruktiv einfache und leicht zu montierende Stützvorrichtung der eingangs genannten Art zu schaffen, die nur wenig Bauraum beansprucht und keine Führungsbahn für den Stützfuß benötigt.

Diese Aufgabe wird erfindungsgemäß durch eine Stützvorrichtung nach Anspruch 1 gelöst. Vorteilhafte Ausgestaltungen und Weiterbildungen der Erfindung ergeben sich aus den abhängigen Ansprüchen.

Diese Lösung sieht gemäß dem Kern der vorliegenden Erfindung vor, dass das Zylindergehäuse fest mit einem zur Befestigung an dem Fahrzeug oder an dem Fahrzeugaufbau vorgesehenen Befestigungsflansch verbunden ist, und dass der Befestigungsflansch mittels eines Gegenflansches und mehrerer Schraubverbindungen an einem Träger des Fahrzeugs oder des Fahrzeugaufbaus festgeklemmt ist.

Das Zylindergehäuse ist somit mit einem Flansch für die unbewegliche und positionsstabile Befestigung an dem Fahrzeug oder an dem Fahrzeugaufbau ausgeführt. Der Hydraulikzylinder der Stützvorrichtung kann über den starr am Hydraulikzylinder der Stützvorrichtung befestigten Befestigungsflansch, der zur Befestigung an dem Fahrzeug oder an dem Fahrzeugaufbau geeignet und dafür vorgesehen und bestimmt ist, daran befestigt werden. Der Befestigungsflansch dient dabei zur alleinigen Befestigung der gesamten Stützvorrichtung an einem Träger des Fahrzeugs bzw. des Fahrzeugaufbaus, vorzugsweise an einem Längsträger des Fahrzeug-Chassis. Hierdurch ergibt sich eine konstruktiv einfache und besonders leicht und schnell zu montierende Ausführungsform. Insbesondere kann die Stützvorrichtung dann auch nachträglich noch an bzw. unter einem vorhandenen Fahrzeug, etwa an einem Wohnmobil oder Wohnwagen angebracht werden. Der Befestigungsflansch kann dazu entweder einstückig mit dem Zylindergehäuse ausgebildet oder an das Zylindergehäuse angeschweißt sein.

Erfindungsgemäß ist der Befestigungsflansch des Zylindergehäuses mittels eines zugehörigen Gegenflansches und mehrerer Schraubverbindungen an einem Träger des Fahrzeugs oder des Fahrzeugaufbaus, vorzugsweise an einem Träger des Chassis eines Fahrzeugs festgeklemmt. Die Schraubverbindungen durchgreifen dabei jeweils eine Durchgangsbohrung in dem Träger. Diese Art einer Klemmverbindung erlaubt eine besonders einfache Art der Montage, die leicht auch nachträglich noch und ohne Gewährleistungseinbußen an einem Fahrzeug ausgeführt werden kann. Ebenso ist hierbei durch Lösen der Schraubverbindungen auch eine spätere Demontage der Stützvorrichtung einfach ausführbar.

Das Zylindergehäuse des Hydraulikzylinders, welches relativ zu dem Anlenkpunkt der Seitenstrebe feststeht, ist dabei unbeweglich und positionsstabil, d.h. nicht verdrehbar oder schwenkbar und auch nicht translatorisch verschiebbar fest an dem Fahrzeug oder an dem Fahrzeugaufbau befestigt.

Wesentlich ist es somit, dass der Hydraulikzylinder der Stützvorrichtung starr an einem Fahrzeug oder an einem Fahrzeugaufbau, vorzugsweise an dem Chassis eines Fahrzeugs, etwa eines Wohnmobils oder eines Anhängers wie eines Wohnwagens, befestigt ist.

Der mindestens eine der schwenkbaren Anlenkung dienende Anlenkpunkt bzw. die Anlenkachse der mindestens einen Seitenstrebe steht relativ zu dem Zylindergehäuse positionsstabil fest, d.h. der Anlenkpunkt ist hinsichtlich seiner Position in Bezug zu dem Zylindergehäuse nicht bewegbar. Die Seitenstrebe selbst ist dabei um diesen relativ zum Hydraulikzylinder unbeweglich feststehenden Anlenkpunkt schwenkbar.

Aufgrund dieser relativ zu dem Zylindergehäuse unbeweglichen Anordnung des Anlenkpunktes der Seitenstrebe erstreckt sich der Zylinder und somit auch die Kolbenstange bezüglich des Anlenkpunktes stets in einer konstanten Richtung, die als Längsrichtung des Hydraulikzylinders bezeichnet wird. Bei einer Betätigung des Hydraulikzylinders fährt die Kolbenstange und mit ihr auch der daran angelenkte Kopfbereich des Stützfußes stets nur in dieser konstant bleibenden Längsrichtung hin und her.

Ein wesentlicher Vorteil liegt dabei darin, dass durch diese Art der relativ zu dem Zylindergehäuse positionsstabil feststehenden Anordnung des Anlenkpunktes der Seitenstrebe in Kombination mit einer positionsstabilen und starren Befestigung des Zylindergehäuses an einem Fahrzeug bzw. Fahrzeugaufbau auf die Anordnung einer Führungsbahn für den Stützfuß verzichtet werden kann, ohne hierdurch Abstriche in der Funktionalität oder dem Komfort machen zu müssen. Die Stützvorrichtung zeichnet sich daher nicht nur durch ein geringes Gewicht, sondern auch durch eine besonders einfache Konstruktion und einen erheblich reduzierten Platzbedarf aus.

Ferner gestattet die erfindungsgemäße Stützvorrichtung eine besonders große Abstützhöhe beim in die Stützposition heruntergefahrenen Stützfuß sowie eine minimale Bauhöhe der Stützvorrichtung, wenn der Stützfuß in die Transportposition hochgefahren ist. Ein wesentlicher Vorteil dieses großen Hubpotenzials besteht darin, dass man Fahrzeuge auch auf sehr schrägem Untergrund nivellieren kann, ohne den am tiefsten liegenden Stütze oder sogar mehrere Stützen durch untergelegte Gegenstände wie Platten, Steine oder andere Unterlagen verlängern zu müssen. Diese Eigenschaft bietet eine größere Standsicherheit und vermeidet die potentielle Rutschgefahr auf glatten Unterlagen.

Dabei erlaubt die Stützvorrichtung aufgrund der relativ einfachen Kinematik beim Ausfahren des Stützfußes eine zumindest nahezu exakt vertikal verlaufende Absetzbewegung des unteren Aufsetzbereichs, was insbesondere im Hinblick auf eine frei von seitlichen Verschiebungen und somit besonders einfache und exakte Ausrichtung des Fahrzeugs von großem Vorteil ist.

Von Vorteil ist es ferner, dass der Anlenkpunkt der mindestens einen Seitenstrebe entweder an dem Zylindergehäuse selbst oder an einem fest mit dem Zylindergehäuse verbundenen Teil Bauteil angeordnet ist. Die erfindungsgemäße Stützvorrichtung benötigt dann nur eine einzige Befestigung am Fahrzeug bzw. Fahrzeugaufbau, wodurch sie besonders leicht und schnell insbesondere auch als Nachrüstvorrichtung an einem Fahrzeug bzw. Fahrzeugaufbau montiert werden kann. Es muss dabei nämlich nur das Zylindergehäuse am Fahrzeug bzw. Fahrzeugaufbau befestigt werden. Diese Befestigung des Zylindergehäuses kann entweder lösbar, d.h. mehrfach zerstörungsfrei wieder abnehmbar und erneut montierbar, oder nicht lösbar ausgeführt sein.

Ein wesentlicher Vorteil liegt bei dieser Ausführungsform darin, dass die Struktur des Fahrzeugs bzw. Fahrzeugaufbaus beim Ein- und Ausfahren des Hydraulikzylinders - abgesehen von den durch die Stützvorrichtung erwünschten Stützkräften bzw. Hubkräften - nicht durch weitere Kräfte belastet wird. Insbesondere wirken beim Herunterfahren des Stützfußes auch nach dessen Aufsetzen auf einem Untergrund keine durch die Betätigung des Hydraulikzylinders ausgeübten Druck- oder Zugkräfte auf verschiedene Komponenten des Fahrzeugs bzw. Fahrzeugaufbaus, da derartige Reaktionskräfte ausschließlich von dem Zylindergehäuse des Hydraulikzylinders selber aufgenommen werden. Hinsichtlich dieser vor allem in Querrichtung auftretenden Reaktionskräfte arbeitet die erfindungsgemäße Stützvorrichtung also unabhängig von der abzustützenden Struktur "in sich".

Besonders vorteilhaft ist es, wenn auch das Zylindergehäuse des Hydraulikzylinders durch eine in dem Träger ausgenommene Öffnung hindurchgeht, wodurch eine optimale Platzierung der Stützvorrichtung erreicht werden kann.

Gemäß einer besonders bevorzugten Ausführungsform der Erfindung wird vorgeschlagen, dass der Anlenkpunkt der mindestens einen Seitenstrebe auf dem Zylindergehäuse liegt. Mit anderen Worten ausgedrückt bedeutet das, dass der Anlenkpunkt der mindestens einen Seitenstrebe zwischen der Stirnseite des Zylindergehäuses, an der die Kolbenstange aus dem Zylindergehäuse austritt, und dem von dieser Stirnseite abgewandten Boden des Zylindergehäuses liegt.

Diese Konfiguration der Stützvorrichtung ermöglicht es, dass der Stützfuß bei einer Zugbeaufschlagung des Hydraulikzylinders durch Einfahren der Kolbenstange in das Zylindergehäuse aus der nach oben hochgefahrenen Transportposition in die nach unten heruntergefahrene Stützposition verlagert wird. Da für die Ausübung dieser hydraulischen Zugkraft nur eine die Kolbenstange umgebende Ringfläche des Kolbens zur Verfügung steht, ist eine möglichst dünne Ausführung der Kolbenstange von Vorteil. Eine dünne Kolbenstange ist dabei hinsichtlich der Aufnahme von vom Stützfuß ausgeübten Querkräften insofern unproblematisch, da diese erst bei Berührung des Untergrundes und somit erst auf dem letzten Stück des Einfahrweges der Kolbenstange auftreten, wo eine größere seitliche Auslenkung der Kolbenstange nicht mehr möglich ist. Ein weiterer Vorteil dieser Ausführungsform liegt darin, dass nur ein besonders geringes Volumen an Hydraulikflüssigkeit benötigt wird, um den gesamten für das Verstellen des Stützfußes zwischen der Transportposition und der Stützposition erforderlichen Hubweg des Hydraulikzylinders ausführen zu können. Dadurch kann auch der Öltank des Hydrauliksystems entsprechend klein dimensioniert werden, was gerade im Bereich der Fahrzeuge einen erheblicher Vorteil darstellt.

Der Hydraulikzylinder ist vorteilhafterweise doppeltwirkend ausgeführt, so dass der Stützfuß bei einer hydraulischen Druckbeaufschlagung des Kolbens durch Ausfahren der Kolbenstange aus dem Zylindergehäuse aus der nach unten heruntergefahrenen Stützposition in die nach oben hochgefahrene Transportposition verlagert werden kann. Vorzugsweise ist der Hydraulikzylinder einstufig ausgeführt, was eine besonders einfache und kostengünstige Ausführung erlaubt. Vorteilhafterweise ist dabei ein Sicherheitsventil vorgesehen, bzw. bei einem doppeltwirkenden Zylinder können zwei Sicherheitsventile vorgesehen werden, um im Falle eines hydraulischen Druckverlustes einerseits die Stützvorrichtung in der heruntergefahrenen Stützposition gegen ungewolltes Absenken des Fahrzeugs zu sichern und andererseits um in der hochgefahrenen Transportposition ein ungewolltes Herabfahren des Stützfußes während der Fahrt zu vermeiden. Derartige Sicherheitsventile bzw. Absperrventile können vorteilhafterweise in den Hydraulikzylinder, insbesondere kolbenseitig in den Boden des Hydraulikzylinders, integriert sein.

Besonders vorteilhaft ist es, wenn der Anlenkpunkt der mindestens einen Seitenstrebe in der Flucht der Kolbenstange liegt. Das bedeutet, dass der Anlenkpunkt der mindestens einen Seitenstrebe von der Seite betrachtet auf gleicher Höhe wie die Längsachse des Zylindergehäuses und der Kolbenstange liegt. Somit hat der Anlenkpunkt der mindestens einen Seitenstrebe bei entsprechender Anbringung unter einem Fahrzeugboden vorteilhafterweise auch den gleichen Abstand zum Fahrzeugboden wie der Hydraulikzylinder und die Kolbenstange, mit denen er dann auf einer zum Fahrzeugboden parallelen Ebene liegt.

Vorteilhafterweise ist der Aufsetzbereich in an sich bekannter Weise durch einen vorzugsweise kugelgelenkig mit dem Stützfuß verbundenen Stützteller gebildet.

Besonders vorteilhaft ist es im Falle eines an dem Zylindergehäuse vorgesehenen Befestigungsflansches, wenn der Anlenkpunkt der mindestens einen Seitenstrebe an dem Befestigungsflansch angeordnet ist. Der Befestigungsflansch übernimmt somit gleichzeitig zwei Aufgaben, nämlich einerseits die Bereitstellung einer Möglichkeit zur Befestigung an einem zumindest zeitweise abzustützenden Fahrzeug bzw. Fahrzeugaufbau, sowie andererseits die Aufnahme des Anlenkpunktes für die Seitenstrebe der Stützvorrichtung.

Der Befestigungsflansch kann sich insbesondere senkrecht zu der Längsrichtung des Hydraulikzylinders, also senkrecht zu der Verschieberichtung des Kolbens erstrecken. Günstig kann es aber insbesondere bei schräg zur Längsrichtung des Fahrzeugs verlaufende Träger des Chassis auch sein, wenn die Längsrichtung des Zylindergehäuses mit der Ebene des zugehörigen Befestigungsflansches einen Winkel zwischen 90° und 45°, vorzugsweise von 75° einschließt. So kann die Stützvorrichtung leicht an einem relativ zur Längsrichtung des Fahrzeugs schräg verlaufende Träger angebracht werden und dennoch ein Verschwenken des Stützfußes in einer senkrecht zur Längsrichtung des Fahrzeugs verlaufenden Ebene ermöglichen.

Gemäß einer weiteren bevorzugten Ausführungsform wird vorgeschlagen, dass die Stützvorrichtung zwei oder mehr Stützfüße umfasst, die an den beiden einander gegenüberliegenden Längsseiten des Fahrzeugs bzw. Fahrzeugaufbaus angeordnet sind. Grundsätzlich kann die Stützvorrichtung auch zum Abstützen anderer Gegenstände eingesetzt werden. Bei der Abstützung eines Fahrzeugs, insbesondere eines Anhängers, kann vorteilhafterweise auch eine Dreipunktabstützung zum Einsatz kommen, welche nicht nur eine besonders einfach steuerbare Nivellierung erlaubt, sondern stets auch besonders eine stabile Abstützung des Fahrzeugs ermöglicht, bei der unabhängig von der Art und Ausrichtung des Untergrunds stets alle Aufsetzbereiche bzw. Stützteller der drei Stützfüße satt auf dem Untergrund aufliegen.

Weitere Vorteile und Merkmale der Erfindung ergeben sich aus der nachfolgenden Beschreibung und den in den Zeichnungen dargestellten Ausführungsbeispielen. Es zeigen:
- Figur 1a:: Vorderansicht einer ersten Ausführungsform einer erfindungsgemäßen Stützvorrichtung, bei der der Stützfuß in die Transportposition hochgefahren ist,
- Figur 1b:: die Stützvorrichtung aus Figur 1a, bei der der Stützfuß in eine Abstützposition heruntergefahren ist,
- Figur 1c:: die Stützvorrichtung aus Figur 1b in einer Seitenansicht,
- Figur 1d:: die Stützvorrichtung aus Figur 1b in einer dreidimensionalen Perspektiv-Ansicht,
- Figuren 2a-2c:: Darstellung einer zweiten Ausführungsform einer erfindungsgemäßen Stützvorrichtung in jeweils den Figuren 1a, 1b und 1d entsprechenden Ansichten,
- Figur 3:: Darstellung einer dritten Ausführungsform einer erfindungsgemäßen Stützvorrichtung in einer dreidimensionalen Perspektiv-Ansicht,
- Figur 4a:: dreidimensionale Perspektiv-Ansicht eines Befestigungsflansches für eine erfindungsgemäße Stützvorrichtung,
- Figur 4b:: der Befestigungsflansch aus Figur 4a in einer Draufsicht,
- Figuren 5a-5b:: Darstellung einer Ausführungsvariante des Befestigungsflansches in jeweils den Figuren 4a 4b entsprechenden Ansichten.

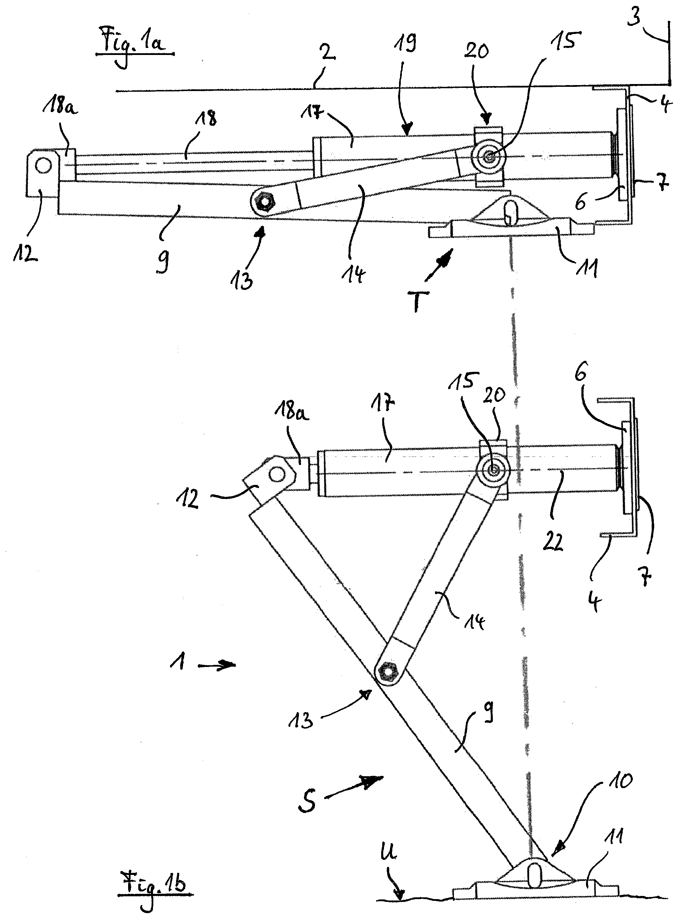

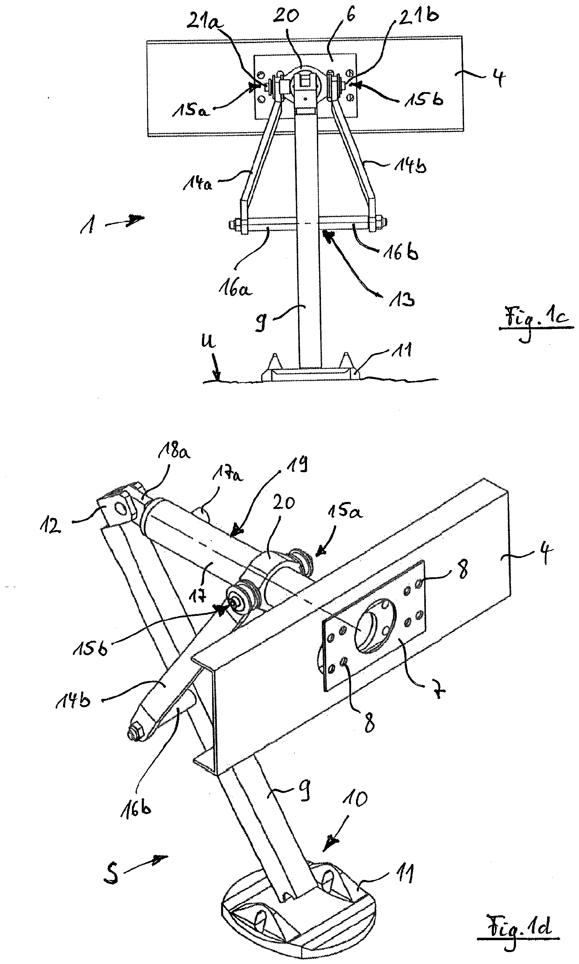

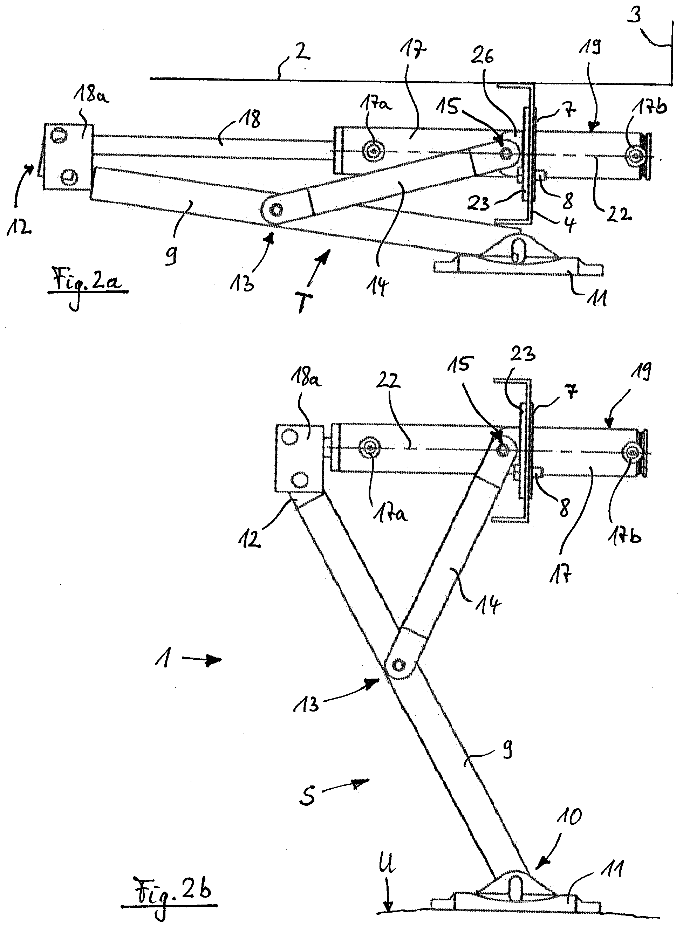

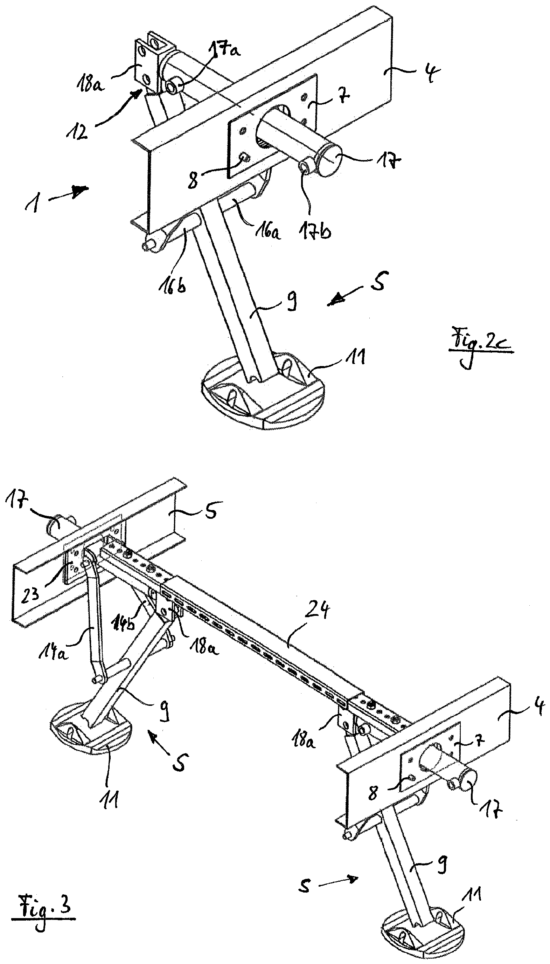

Sämtliche Stützvorrichtungen 1 in den drei Ausführungsbeispielen der Figuren 1a bis 3 sind unter dem Boden 2 eines nur in den Figuren 1a und 2a angedeuteten Wohnmobils oder Wohnwagens 3 angebracht. In allen übrigen Figuren ist das Wohnmobil bzw. der Wohnwagen und sein Boden nicht dargestellt, sondern nur jeweils ein Teil eines Längsträgers 4 des Fahrzeug-Chassis. Die in Figur 3 dargestellte Ausführungsform ist an zwei Längsträgern 4 und 5 des Fahrzeug-Chassis angebracht. An den Längsträgern 4 bzw. 5 können die Stützvorrichtungen 1 jeweils über nachfolgend noch detaillierter beschriebene Flansche 6 sowie zugeordnete Gegenflansche 7 befestigt werden, die mittels Schraubverbindungen 8 paarweise gegeneinander verspannt sind und dabei jeweils einen der Längsträger 4 zwischen sich festklemmen.

Die in den Figuren 1a-1d als erstes Ausführungsbeispiel dargestellte Stützvorrichtung 1 umfasst einen Stützfuß 9, der hydraulisch betätigt zwischen einer nach oben hochgefahrenen Transportposition T (Figur 1a) und einer nach unten heruntergefahrenen Stützposition S (Figuren 1b bis 1d) verstellt werden kann. An seinem unteren Ende weist der Stützfuß 9 einen Aufsetzbereich 10 mit einem schwenkbar daran angelenkten Stützteller 11 auf, der beim Herunterfahren des Stützfußes 9 auf einen Untergrund U aufsetzt, um den Wohnwagen 3 abzustützen. Die schwenkbare Lagerung des Stütztellers 11 an dem Aufsetzbereich 10 des Stützfußes 9 erlaubt eine gute Anpassung an gegebenenfalls vorhandene Unebenheiten oder lokale Neigungen des Untergrunds U und somit eine stabile Abstützung des Wohnwagens 3. Selbstverständlich können auch zwei oder mehr derartige Stützvorrichtungen 1 an einem Fahrzeug, etwa einem Wohnwagen 3, oder an einem Fahrzeugaufbau angebracht werden.

An seinem dem Aufsetzbereich 10 gegenüberliegenden oberen Ende weist der Stützfuß 9 einen Kopfbereich 12 auf, der sowohl in der hochgefahrenen Transportposition T als auch in der heruntergefahrenen Stützposition S sowie ferner auch in jeder dazwischen liegenden Zwischenposition des Stützfußes 9 auf der Höhe des Längsträgers 4 oder 5 liegt, an dem die Stützvorrichtung 1 befestigt ist. Zwischen dem Kopfbereich 12 und dem Aufsetzbereich 10 befindet sich ein Zwischenbereich 13, an dem ein erstes Ende einer Seitenstrebe 14 schwenkbar an dem Stützfuß 9 angelenkt ist. Das zweite Ende der Seitenstrebe 14 ist schwenkbar an einem Anlenkpunkt 15 angelenkt. Die Seitenstrebe 14 umfasst in dem hier dargestellten Ausführungsbeispiel zwei Strebenarme 14a und 14b, die sich ausgehend von ihrem jeweiligen Anlenkpunkt 15a bzw. 15b voneinander weggerichtet schräg nach außen erstrecken und an ihrem anderen Ende jeweils über eine Verbindungsachse 16a bzw. 16b schwenkbar mit dem Zwischenbereich 13 des Stützfußes 9 sowie auch mit dem jeweils anderen Strebenarm 14b oder 14a verbunden sind, so dass sich beide Strebenarme 14a und 14b stets nur zusammen bzw. parallel miteinander bewegen können. Auf diese Weise ist der Stützfuß 9 besonders stabil gelagert. Die jeweiligen Anlenkpunkte 15a und 15b der beiden Strebenarme 14a und 14b definieren dabei zusammen eine Schwenkachse für die Seitenstrebe 14, wobei diese Schwenkachse dem Anlenkpunkt 15 der Seitenstrebe 14 entspricht.

Zum Verstellen des Stützfußes 9 von der in Figur 1a gezeigten nach oben hochgefahrenen Transportposition T in die in den Figuren 1b bis 1d dargestellte nach unten heruntergefahrene Stützposition S ist ein einstufiger, mit zwei Druckanschlüssen 17a und 17b versehener doppeltwirkender Hydraulikzylinder 17 angeordnet, dessen Kolbenstange 18 mit ihrem am freien Ende ausgebildeten Stangenauge 18a schwenkbar an dem Kopfbereich 12 des Stützfußes 9 angelenkt ist.

An den Boden des Zylindergehäuses 19 ist zur Montage ein vorangehend bereits erwähnter Flansch 6 angeschweißt. Über die durch den Flansch 6 und einen zugehörigen Gegenflansch 7 mit Hilfe von acht Schraubverbindungen 8 ausgeführte Klemmverbindung ist das Zylindergehäuse 19 des Hydraulikzylinders 17 positionsstabil an dem Längsträger 4 des Chassis fixiert, so dass der Hydraulikzylinder 17 mit seinem Zylindergehäuse 19 unbeweglich an dem Wohnwagen 3 befestigt ist.

Der Anlenkpunkt 15 der Seitenstrebe 14 ist an einer Halterung 20 ausgebildet, die das Zylindergehäuse 19 in einem mittleren Bereich ringförmig umgibt und daran befestigt ist. An den beiden einander diametral gegenüberliegenden Seitenbereichen der Halterung 20 stehen zwei bolzenförmige Vorsprünge 21a und 21b nach außen vor, die jeweils einen Anlenkpunkt 15a bzw. 15b für jeweils einen der beiden Strebenarme 14a bzw. 14b der Seitenstrebe 14 ausbilden. Die Halterung 20 kann beispielsweise an das Zylindergehäuse 19 angeklemmt, angeschweißt, darauf aufgeschrumpft oder anderweitig daran befestigt sein. So ist sichergestellt, dass der Anlenkpunkt 15 der Seitenstrebe 14 bzw. die beiden Anlenkpunkte 15a und 15b der beiden Strebenarme 14a und 14b der Seitenstrebe 14 gemäß der vorliegenden Erfindung relativ zu dem Zylindergehäuse 19 in ihrer Position unveränderlich feststehend angeordnet sind. Der Anlenkpunkt 15 liegt dabei auf der durch die Linie 22 angedeuteten Flucht der Kolbenstange 18 und somit auf gleicher Höhe wie der Hydraulikzylinder 17 und die Kolbenstange 18.

Der Stützfuß 9 ist ausschließlich an Komponenten des Hydraulikzylinders 17 angelenkt, nämlich mit seinem Kopfbereich 12 unmittelbar an dem Stangenauge 18a der Kolbenstange 18 und mit seinem Zwischenbereich 13 über die Seitenstrebe 14 mittelbar an dem Zylindergehäuse 19. Daher benötigt die erfindungsgemäße Stützvorrichtung 1 keine Führungsbahn zur Führung des Kopfbereichs 12 des Stützfußes 9. Der Kopfbereich 12 wird hier lediglich durch die Kolbenstange 18 des Hydraulikzylinders 17 geführt. Zur Anbringung der kompletten Stützvorrichtung 1 an einem Fahrzeug oder Fahrzeugsaufbau reicht es also aus, nur den Hydraulikzylinder 17 daran zu befestigen. Insgesamt wird hierdurch nicht nur eine konstruktiv besonders einfache und leicht an einem Fahrzeug oder an einem Fahrzeugsaufbau montierbare Stützvorrichtung 1 geschaffen, sondern auch eine im eingefahrenen Zustand der Transportposition T besonders niedrige Bauhöhe bei gleichzeitig besonders hoher Stützhöhe in der ausgefahrenen Stützposition S erreicht. Somit ergibt sich eine optimale Hubausbeute der erfindungsgemäßen Stützvorrichtung 1.

Ferner besteht ein wesentlicher Vorteil der erfindungsgemäßen Stützvorrichtung 1 darin, dass sie nicht speziell an die Breite eines Fahrzeugs oder Fahrzeugsaufbaus angepasst werden muss. Es reicht vielmehr aus, zwei voneinander unabhängige Stützvorrichtungen 1 in dem vorliegenden Abstand der Längsträger 4 und 5 eines Fahrzeugchassis anzubringen.

Indem die Länge der Seitenstrebe 14 sowohl der Entfernung zwischen dem Kopfbereich 12 und dem Zwischenbereich 13 des Stützfußes 9, als auch der Entfernung zwischen dem Aufsetzbereich 10 und dem Zwischenbereich 13 des Stützfußes 9 entspricht, kann eine nahezu perfekt geradlinig verlaufende vertikale Bewegung des Aufsetzbereichs 10 erreicht werden. Auch wenn bei der erfindungsgemäßen Anordnung eine Führungsbahn für den Kopfbereich 12 des Stützfußes 9 nicht erforderlich ist, kann gleichwohl über seine gesamte Verlagerungsstrecke hinweg oder vorzugsweise nur über einen die Stützposition S abdeckenden Teilbereich hiervon eine zusätzliche Abstützung des Kopfbereichs 12 an einer unter dem Boden 2 des Wohnwagens 3 angeordneten Anlagefläche vorgesehen werden. Dazu könnte der Kopfbereich 12 vorteilhafterweise mit einer Lagereinrichtung wie etwa Rollen versehen sein.

Der Hydraulikzylinder 17 ist hydraulisch mit einem hier nicht dargestellten Hydraulikaggregat verbunden. Das hier vorteilhafterweise reversierbar ausgeführte Hydraulikaggregat wird von einem Elektromotor angetrieben, so dass der Stützfuß 9 je nach Drehrichtung des Elektromotors in die Stützposition S heruntergefahren oder in die Transportposition T hochgefahren werden kann. Der Elektromotor ist vorzugsweise elektrisch mit einer Steuereinheit verbunden, durch die das Hydraulikaggregat und somit auch der Stützfuß 9 computergesteuert betätigt werden kann. Alternativ zu einem reversierbaren Hydraulikaggregat kann auch ein nichtreversierbares Hydraulikaggregat verwendet werden, welches mit entsprechenden Steuerventilen verbunden ist, die ebenfalls computergesteuert von einer Steuereinheit betätigt werden können.

Zum Herunterfahren des Stützfußes 9 in die Stützposition S wird der Hydraulikzylinder 17 von dem Hydraulikaggregat durch den Druckanschluss 17a hindurch derart druckbeaufschlagt, dass die Kolbenstange 18 in das Zylindergehäuses 19 hineinfährt. Sie wird dabei auf Zug beansprucht. Zum Hochfahren des Stützfußes 9 in die Transportposition T wird der Hydraulikzylinder 17 vom Hydraulikaggregat durch den anderen Druckanschluss 17b hindurch druckbeaufschlagt, wodurch die Kolbenstange 18 aus dem Zylindergehäuses 19 ausfährt.

Bei dem in den Figuren 2a bis 2c dargestellten zweiten Ausführungsbeispiel ist der Befestigungsflansch 23 nicht am Boden des Hydraulikzylinders 17, sondern in einem mittleren Bereich des Zylindergehäuses 19 befestigt. Dabei ist/sind außerdem der Anlenkpunkt 15 der Seitenstrebe 14 bzw. die beiden Anlenkpunkte 15a und 15b der beiden Strebenarme 14a und 14b der Seitenstrebe 14 direkt an diesem Befestigungsflansch ausgebildet. Eine separate Halterung 20 mit bolzenförmig nach außen vorstehenden Vorsprüngen 21a und 21b kann daher entfallen. Der Befestigungsflansch 23 dient hier also gleichzeitig der Aufnahme des Anlenkpunktes 15 für die Seitenstrebe 14 der Stützvorrichtung 1 sowie auch der Bereitstellung einer Möglichkeit zur Befestigung an einem Fahrzeug oder Fahrzeugaufbau. Dabei kann das Zylindergehäuse 19 bei der ebenfalls mit Hilfe eines Gegenflansches 7 und mehrerer Schraubverbindungen 8 ausführbaren Befestigung an einem Längsträger 4 oder 5 eines Fahrzeugs 3 vorteilhafterweise eine darin ausgebildete Öffnung durchgreifen.

Bei dem in Figur 3 dargestellten dritten Ausführungsbeispiel handelt es sich um eine Variante, die insbesondere dann zum Einsatz kommen kann, wenn die vorhandenen Längsträger 4 und 5 des Fahrzeugs 3 keine ausreichende Torsionsfestigkeit aufweisen. In diesem Fall ist es von Vorteil, die beiden einander gegenüberliegenden Stützvorrichtungen mit einem vorzugsweise dünnen Zugstangenprofil miteinander zu verbinden, um das Chassis des Fahrzeugs 3 gegenüber möglichen Querbelastungen zu schützen. Dabei weist die Stützvorrichtung 1 zum Abstützen der beiden einander gegenüber liegenden Fahrzeugseiten zwei Stützfüße 9 auf, die in Längsrichtung des Wohnwagens 3 bzw. in Richtung der Längsträger 4 und 5 des Fahrzeug-Chassis betrachtet auf gleicher Höhe nebeneinander liegen. Die Zylindergehäuse 19 der beiden Hydraulikzylinder 17 sind dabei über eine in ihrer Länge an den Abstand der beiden Längsträger 4 und 5 angepasste Profilschiene 24 miteinander verbunden. Die beiden Stützfüße 9 mit den Hydraulikzylindern 17 und Seitenstreben 14 sind bezüglich einer zwischen den beiden Hydraulikzylindern 17 liegenden Symmetrieebene symmetrisch zueinander angeordnet.

Sofern eine zusätzliche Abstützung des Kopfbereichs 12 an einer unter dem Boden 2 des Wohnwagens 3 angeordneten Anlagefläche vorgesehen werden soll, kann der Kopfbereich 12 vorteilhafterweise mit einer Rolleneinrichtung versehen sein, die sich in oder an einer als Zugstangenprofil dienenden Profilschiene 24 abstützt.

Auch bei dem dritten Ausführungsbeispiel sind die Befestigungsflansche 23 zum Anbringen der beiden Hydraulikzylinder 17 an den Längsträgern 4 und 5 des Fahrzeug-Chassis entsprechend den Figuren 2a bis 2c jeweils in einem mittleren Bereich des jeweiligen Zylindergehäuses 19 befestigt.

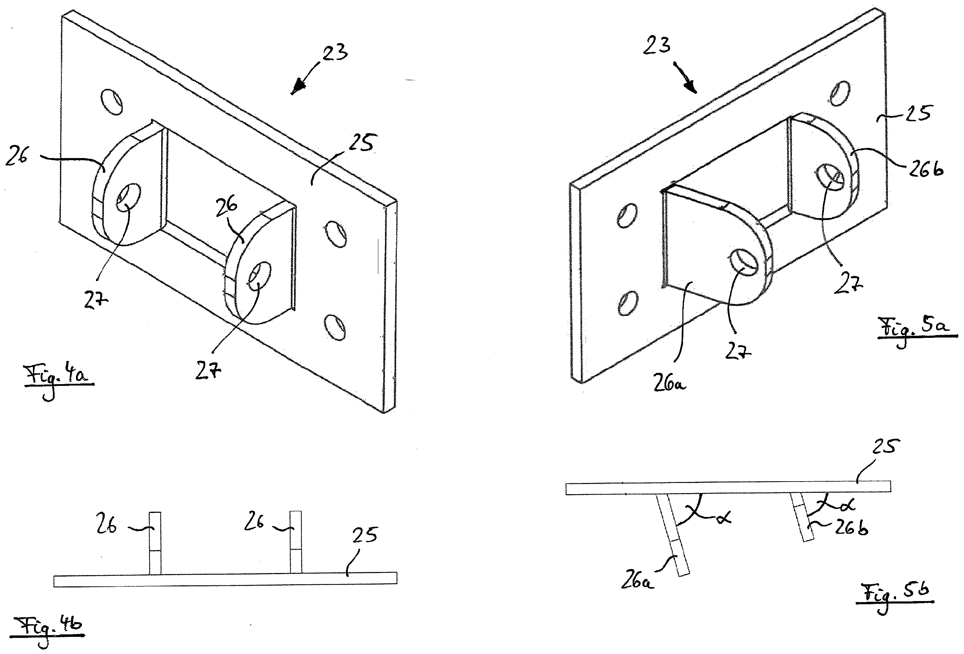

Der hierbei jeweils zum Einsatz kommende Befestigungsflansch 23 ist im Detail in den Figuren 4a und 4b gezeigt. Er besteht aus einer rechteckigen Grundplatte 25, aus der zwei Laschen 26 über einen U-förmigen Umfang ausgestanzt und senkrecht aus der Ebene der Grundplatte 25 herausgebogen sind. Jede Lasche 26 ist dabei mit einer Lochung 27 versehen, um jeweils einen Anlenkpunkt 15a bzw. 15b für einen der beiden Strebenarme 14a und 14b der Seitenstrebe 14 zu bilden. Der Befestigungsflansch 23 wird derart an dem Zylindergehäuse 19 befestigt, dass er sich senkrecht zu der Längsrichtung des Hydraulikzylinders 17 erstreckt.

In den Figuren 5a und 5b ist eine Ausführungsvariante eines Befestigungsflansches 23 dargestellt, die bei schräg zur Längsrichtung eines Fahrzeugs verlaufenden Trägern des Chassis zum Einsatz kommen kann. Die beiden Laschen 26a und 26b sind dabei in einem Winkel α von jeweils 75° aus der Grundplatte 25 herausgebogen, wobei die Lasche 26a länger ist als die Lasche 26b. Dieser Befestigungsflansch 23 wird derart an dem Zylindergehäuse 19 befestigt, dass er mit der Längsrichtung des Zylindergehäuses 19 ebenfalls einen Winkel von 75° einschließt. Auf diese Weise kann die Stützvorrichtung 1 so an einem relativ zur Längsrichtung des Fahrzeugs schräg verlaufende Träger 4 oder 5 angebracht werden, dass der Stützfuß 9 dennoch in einer senkrecht zur Längsrichtung des Fahrzeugs verlaufenden Ebene verschwenkt werden kann.

## Patentansprüche

1. Hydraulisch betätigbare Stützvorrichtung (1) an einem Fahrzeug (3) oder an einem Fahrzeugaufbau, umfassend
- einen zwischen einer nach oben hochgefahrenen Transportposition (T) und einer nach unten heruntergefahrenen Stützposition (S) verlagerbaren Stützfuß (9), der einen in der Stützposition (S) auf einem Untergrund (U) aufsetzbaren Aufsetzbereich (10) und einen hiervon entfernten Kopfbereich (12) aufweist,
- einen Hydraulikzylinder (17) mit einem Zylindergehäuse (19), in dem ein mit einer Kolbenstange (18) verbundener Kolben axial verschiebbar geführt ist, wobei die Kolbenstange (18) an dem Kopfbereich (12) des Stützfußes (9) schwenkbar angelenkt ist, und wobei das Zylindergehäuse (19) des Hydraulikzylinders (17) unbeweglich an dem Fahrzeug (3) oder an dem Fahrzeugaufbau, vorzugsweise an dem Chassis (4) des Fahrzeugs (3) befestigt ist,
- mindestens eine Seitenstrebe (14), die einerseits an einem zwischen dem Aufsetzbereich (10) und dem Kopfbereich (12) liegenden Zwischenbereich (13) des Stützfußes (9) und andererseits an einem Anlenkpunkt (15) jeweils schwenkbar angelenkt ist,
wobei der Anlenkpunkt (15) der mindestens einen Seitenstrebe (14) relativ zu dem Zylindergehäuse (19) feststehend angeordnet ist, indem er an dem Zylindergehäuse (19) oder an einem fest mit dem Zylindergehäuse (19) verbundenen Teil (20) angeordnet ist,
**dadurch gekennzeichnet,**
**dass** das Zylindergehäuse (19) fest mit einem zur Befestigung an dem Fahrzeug (3) oder an dem Fahrzeugaufbau vorgesehenen Befestigungsflansch (6, 23) verbunden ist,
und **dass** der Befestigungsflansch (6, 23) mittels eines Gegenflansches (7) und mehrerer Schraubverbindungen (8) an einem Träger (4) des Fahrzeugs (3) oder des Fahrzeugaufbaus festgeklemmt ist.

2. Stützvorrichtung (1) nach Anspruch 1, **dadurch gekennzeichnet, dass** das Zylindergehäuse (19) des Hydraulikzylinders (17) eine in dem Träger (4) ausgenommene Öffnung durchgreift.

3. Stützvorrichtung (1) nach Anspruch 1 oder 2, **dadurch gekennzeichnet, dass** der Anlenkpunkt (15) der mindestens einen Seitenstrebe (14) auf dem Zylindergehäuse (19) liegt.

4. Stützvorrichtung (1) nach Anspruch 3, **dadurch gekennzeichnet, dass** der Stützfuß (9) durch Einfahren der Kolbenstange (18) in das Zylindergehäuse (19) aus der nach oben hochgefahrenen Transportposition (T) in die nach unten heruntergefahrene Stützposition (S) verlagerbar ist.

5. Stützvorrichtung (1) nach einem der vorherigen Ansprüche, **dadurch gekennzeichnet, dass** der Hydraulikzylinder (17) doppeltwirkend ausgeführt ist.

6. Stützvorrichtung (1) nach einem der vorherigen Ansprüche, **dadurch gekennzeichnet, dass** zumindest an der Kolbenseite des Hydraulikzylinders (17) ein Absperrventil oder Sicherheitsventil angeordnet ist.

7. Stützvorrichtung (1) nach einem der vorherigen Ansprüche, **dadurch gekennzeichnet, dass** zwei Sicherheitsventile in den Hydraulikzylinder (17), insbesondere kolbenseitig in den Boden des Hydraulikzylinders (17), integriert sind.

8. Stützvorrichtung (1) nach einem der vorherigen Ansprüche, **dadurch gekennzeichnet, dass** der Anlenkpunkt (15) der mindestens einen Seitenstrebe (14) in der Flucht (22) der Kolbenstange (18) liegt.

9. Stützvorrichtung (1) nach einem der vorherigen Ansprüche, **dadurch gekennzeichnet, dass** der Aufsetzbereich (10) durch einen beweglich an dem Stützfuß (9) angelenkten Stützteller (11) gebildet ist.

10. Stützvorrichtung (1) nach einem der vorherigen Ansprüche, **dadurch gekennzeichnet, dass** der Anlenkpunkt (15) der mindestens einen Seitenstrebe (14) an dem Befestigungsflansch (6, 23) angeordnet ist.

11. Stützvorrichtung (1) nach einem der vorherigen Ansprüche, **dadurch gekennzeichnet, dass** die Längsrichtung des Zylindergehäuses (19) mit der Ebene des Befestigungsflansches (6, 23) einen Winkel zwischen 90° und 45°, vorzugsweise von 75° einschließt.

12. Stützvorrichtung (1) nach einem der vorherigen Ansprüche, **dadurch gekennzeichnet, dass** sie zwei oder mehr Stützfüße (9) umfasst, die an den beiden einander gegenüberliegenden Längsseiten des Fahrzeugs (3) oder des Fahrzeugsaufbaus angeordnet sind.

## Claims

1. A hydraulically-operated support device (1) on a vehicle (3) or on a vehicle body, comprising
- a support foot (9) which can be moved between and upwardly raised transport position (T) and a downwardly lowered support position (S), which support foot comprises a placing region (10) which can be placed in the support position (S) on a base surface (U) and a head region (12) remote from the latter,
- a hydraulic cylinder (17) with a cylinder housing (19), in which a piston connected to a piston rod (18) is guided axially displaceable, wherein the piston rod (18) is coupled pivotably with the head region (12) of the support foot (9), and wherein the cylinder housing (19) of the hydraulic cylinder (17) is fastened immovably to the vehicle (3) or to the vehicle body, preferably to the chassis (4) of the vehicle (3),
- at least one side strut (14) which on the one hand is coupled pivotably to an intermediate region (13) of the support foot (9) lying between the placing region (10) and the head region (12) and on the other hand is pivotably coupled with a coupling point (15),
wherein the coupling point (15) of the at least one side strut (14) is arranged fixed relative to the cylinder housing (19), in that it is arranged on the cylinder housing (19) or on a part (20) fixedly connected to the cylinder housing (19)
**characterised in that**
the cylinder housing (19) is fixedly connected to a fastening flange (6, 23) provided for the fastening to the vehicle (3) or to the vehicle body,
and that the fastening flange (6, 23) is fixedly clamped by means of a counter-flange (7) and a plurality of screw connections (8) to a carrier (4) of the vehicle (3) or the vehicle body.

2. The support device (1) according to claim 1, **characterised in that** the cylinder housing (19) of the hydraulic cylinder (17) engages through an opening provided in the carrier (4).

3. The support device (1) according to claim 1 or 2, **characterised in that** the coupling point (15) of the at least one side strut (14) lies on the cylinder housing (19).

4. The support device (1) according to claim 3, **characterised in that** the support foot (9) is displaceable from the upwardly raised transport position (T) into the downwardly lowered support position (S) by retraction of the piston rod (18) into the cylinder housing (19).

5. The support device (1) according to any one of the preceding claims, **characterised in that** the hydraulic cylinder (17) is constituted double-acting.

6. The support device (1) according to any one of the preceding claims, **characterised in that** a shut-off or safety valve is arranged at least on the piston side of the hydraulic cylinder (17).

7. The support device (1) according to any one of the preceding claims, **characterised in that** two safety valves are integrated into the hydraulic cylinder (17), in particular into the bottom of the hydraulic cylinder (17) on the piston side.

8. The support device (1) according to any one of the preceding claims, **characterised in that** the coupling point (15) of the at least one side strut (14) is in alignment (22) with the piston rod (18).

9. The support device (1) according to any one of the preceding claims, **characterised in that** the placing region (10) is formed by a support plate (11) coupled movably with the support foot (9).

10. The support device (1) according to any one of the preceding claims, **characterised in that** the coupling point (15) of the at least one side strut (14) is arranged on the fastening flange (6, 23).

11. The support device (1) according to any one of the preceding claims, **characterised in that** the longitudinal direction of the cylinder housing (19) encloses an angle between 90° and 45°, preferably 75°, with the plane of the fastening flange (6, 23).

12. The support device (1) according to any one of the preceding claims, **characterised in that** it comprises two or more support feet (9), which are arranged on the two mutually opposite longitudinal sides of the vehicle (3) or the vehicle body.

## Revendications

1. Dispositif de support pouvant être actionné hydrauliquement (1) sur un véhicule (3) ou sur une structure de véhicule, comprenant :
- un pied de support (9) pouvant être déplacé entre une position de transport (T) relevée vers le haut et une position de support (S) abaissée vers le bas, qui comporte une zone de dépose (10) pouvant être posée dans la position de support (S) sur une surface d'appui (U) et une zone de tête (12) éloignée de celle-ci,
- un vérin hydraulique (17) avec un boîtier de vérin (19) dans lequel un piston relié à une tige de piston (18) est guidé de façon axialement mobile, sachant que la tige de piston (18) est articulée pouvant pivoter sur la zone de tête (12) du pied de support (9) et sachant que le boîtier de vérin (19) du vérin hydraulique (17) est fixé de façon immobile sur le véhicule (3) ou sur la structure de véhicule, de préférence sur le châssis (4) du véhicule (3),
- au moins une jambe de force latérale (14), qui est articulée pouvant respectivement pivoter d'une part sur une zone intermédiaire (13) du pied de support (9) située entre la zone de dépose (10) et la zone de tête (12) et d'autre part sur un point d'appui (15),
sachant que le point d'appui (15) d'au moins une jambe de force latérale (14) est disposé de façon fixe par rapport au boîtier de vérin (19) dans lequel il est disposé sur le boîtier de vérin (19) ou sur une partie (20) reliée fermement au boîtier de vérin (19),
**caractérisé**
**en ce que** le boîtier de vérin (19) est fermement relié à une bride de fixation (6, 23) prévue pour la fixation sur le véhicule (3) ou sur la structure de véhicule,
et **en ce que** la bride de fixation (6, 23) est fermement serrée sur un support (4) du véhicule (3) ou de la structure de véhicule au moyen d'une contre-bride (7) et de plusieurs liaisons à vis (8).

2. Dispositif de support (1) selon la revendication 1, **caractérisé en ce que** le boîtier de vérin (19) du vérin hydraulique (17) traverse une ouverture pratiquée dans le support (4).

3. Dispositif de support (1) selon la revendication 1 ou 2, **caractérisé en ce que** le point d'appui (15) d'au moins une jambe de force latérale (14) se situe sur le boîtier de vérin (19).

4. Dispositif de support (1) selon la revendication 3, **caractérisé en ce que** le pied de support (9) peut être déplacé en rentrant la tige de piston (18) dans le boîtier de vérin (19) d'une position de transport (T) relevée vers le haut dans la position de support (S) abaissée vers le bas.

5. Dispositif de support (1) selon l'une quelconque des revendications précédentes, **caractérisé en ce que** le vérin hydraulique (17) est exécuté à double effet.

6. Dispositif de support (1) selon l'une quelconque des revendications précédentes, **caractérisé en ce qu'**au moins une soupape d'arrêt ou soupape de sécurité est disposée sur le côté de piston du vérin hydraulique (17).

7. Dispositif de support (1) selon l'une quelconque des revendications précédentes, **caractérisé en ce que** deux soupapes de sécurité sont intégrées dans le vérin hydraulique (17), en particulier du côté piston dans le fond du vérin hydraulique (17).

8. Dispositif de support (1) selon l'une quelconque des revendications précédentes, **caractérisé en ce que** le point d'appui (15) d'au moins une jambe de force latérale (14) se situe dans l'alignement (22) de la tige de piston (18).

9. Dispositif de support (1) selon l'une quelconque des revendications précédentes, **caractérisé en ce que** la zone de dépose (10) est formée par un plateau de support (11) articulé de façon mobile sur le pied de support (9).

10. Dispositif de support (1) selon l'une quelconque des revendications précédentes, **caractérisé en ce que** le point d'appui (15) d'au moins une jambe de force latérale (14) est disposé sur la bride de fixation (6, 23).

11. Dispositif de support (1) selon l'une quelconque des revendications précédentes, **caractérisé en ce que** la direction longitudinale du boîtier de vérin (19) forme avec le plan de la bride de fixation (6, 23) un angle se situant entre 90° et 45°, de préférence de 75°.

12. Dispositif de support (1) selon l'une quelconque des revendications précédentes, **caractérisé en ce qu**'il comprend deux pieds de support (9) ou plus, qui sont disposés sur les deux côtés longitudinaux du véhicule (3) ou de la structure du véhicule, opposés l'un à l'autre.
